# FASCICULE DE BREVET EUROPEEN

(11) **EP 2 776 539 B1**
(45) Date de publication et mention de la délivrance du brevet: **30.12.2015**
(21) Numéro de dépôt: 12783219.4
(22) Date de dépôt: 08.11.2012
(51) Int. Cl.: C10L 9/08

(54) **REACTEUR DE TORREFACTION ET DE BROYAGE DE BIOMASSE, SYSTEME ET INSTALLATION DE TRAITEMENT DE BIOMASSE INTEGRANT UN TEL REACTEUR, PROCEDE ASSOCIE**
REAKTOR ZUM MAHLEN UND RÖSTEN VON BIOMASSE, BIOMASSENVERARBEITUNGSSYSTEM UND ANLAGE MIT EINEM SOLCHEN REAKTOR SOWIE ZUGEHÖRIGES VERFAHREN
REACTOR FOR GRINDING AND ROASTING BIOMASS, BIOMASS PROCESSING SYSTEM AND FACILITY INCORPORATING SUCH A REACTOR, AND ASSOCIATED METHOD

(30) Priorité: 09.11.2011 FR 1160206
(43) Date de publication de la demande: 17.09.2014
(73) Titulaire: Commissariat à l'Énergie Atomique et aux Énergies Alternatives, 75015 Paris (FR)
(72) Inventeur: CHATAING, Thierry, F-38250 Lans-en-Vercors (FR)
(74) Mandataire: Ahner, Philippe
(86) Numéro de dépôt international: PCT/EP2012/072136
(87) Numéro de publication internationale: WO 2013/068459

(56) Documents cités:
- WO-A1-90/08177
- WO-A1-98/09997
- WO-A1-2009/114195
- WO-A1-2011/057822
- WO-A2-2011/112526

## Description

### DOMAINE TECHNIQUE

L'invention concerne un nouveau réacteur de torréfaction et de broyage de biomasse, de préférence ligno-cellulosique, ainsi qu'un système et une installation de traitement de biomasse intégrant un tel réacteur et son procédé de mise en oeuvre associé.

L'application principale visée par l'invention est la réalisation de combustibles appelés biocombustibles. Des biocombustibles sont constitués classiquement de biomasse ligno-cellulosique et obtenus par déchiquetage, typiquement de plaquettes forestières ou par granulation pour les biocombustibles les plus élaborés.

L'invention a donc trait particulièrement à une installation de traitement de biomasse mettant en oeuvre une presse à granuler en aval du nouveau réacteur de torréfaction et de broyage pour obtenir des biocombustibles aux caractéristiques améliorées par rapport à ceux mis sur le marché jusqu'à ce jour. Un traitement combiné de torréfaction et de granulation permet d'obtenir des biocombustibles avec une densité énergétique élevée, typiquement de l'ordre de 20 à 22 MJ/kg, une densité massique élevée, typiquement de l'ordre de 600 à 650 kg/m³, et des propriétés hydrophobes importantes. Les inventeurs visent donc une amélioration des propriétés hydrophobes des biocombustibles ainsi qu'une augmentation de leur contenu énergétique, typiquement supérieur de 20 à 30%, par rapport à ceux des biocombustibles actuellement existants.

L'invention s'applique également à la gazéification de biomasse en vue de la réalisation de biocarburants à partir du gaz de synthèse largement connu sous l'appellation Syngaz. Dans cette application, le nouveau réacteur de torréfaction et de broyage selon l'invention est de préférence installé en amont d'une unité de conditionnement/stockage de poudre, elle-même en amont d'un réacteur de gazéification pour produire ultérieurement des biocarburants.

### ART ANTÉRIEUR

Dans un contexte où la consommation ne cesse d'augmenter, la valorisation de la biomasse est envisagée afin de diversifier les ressources d'énergies. Les filières de conversion thermique par gazéification et combustion sont particulièrement envisagées. La combustion de biocombustibles en est une filière particulière.

La torréfaction de la biomasse, de préférence ligno-cellulosique, est une étape de prétraitement de la biomasse. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, généralement réalisé à des températures comprises entre 200°C et 350°C et qui vise à éliminer l'eau et à modifier une partie de la matière organique de la biomasse pour casser ses fibres.

Autrement dit, ce traitement thermique doux altère la structure fibreuse de la biomasse, facilitant ainsi son broyage et son injection dans un réacteur de gazéification ou de co-combustion.

Le prétraitement par torréfaction améliore également les propriétés de la biomasse en particulier en vue de son stockage en lui conférant notamment un caractère hydrophobe et une résistance aux dégradations biologiques.

La torréfaction de la biomasse ligno-cellulosique est donc une étape de prétraitement en vue de son injection sous forme pulvérisée dans un réacteur à flux entraîné (réacteur de gazéification) ou dans un réacteur dit de co-combustion (biomasse et charbon) dans une centrale thermique à charbon ou en vue de sa granulation pour réaliser des biocombustibles.

Avec les installations industrielles actuellement existantes sur le marché, pour obtenir des caractéristiques améliorées de biocombustibles, telles qu'évoquées en préambule, la biomasse doit subir une torréfaction pendant une durée classiquement de 20 à 40 minutes. Cette durée de traitement est importante et c'est pourquoi elle nécessite des installations de grande taille dépendant de la technologie utilisée. On peut citer les sociétés CMI, Whysmont ou TOPELL qui mettent déjà en oeuvre ce type d'installations.

En outre, comme indiqué en préambule, un traitement combiné de torréfaction et granulation permet d'obtenir des biocombustibles avec une densité énergétique élevée, typiquement de l'ordre de 20 à 22 MJ/kg, une densité massique élevée, typiquement de l'ordre de 600 à 650 kg/m³, et des propriétés hydrophobes importantes.

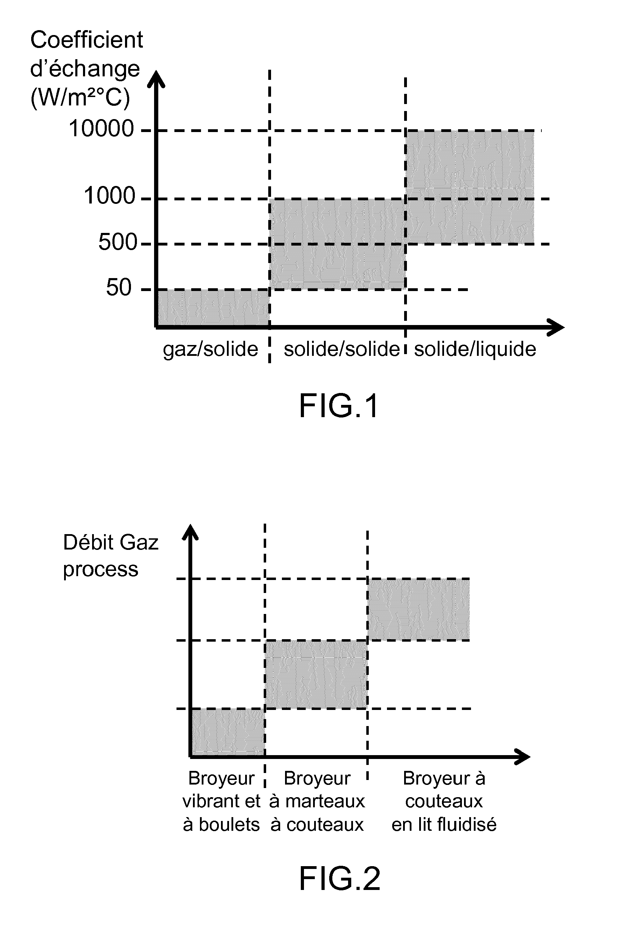

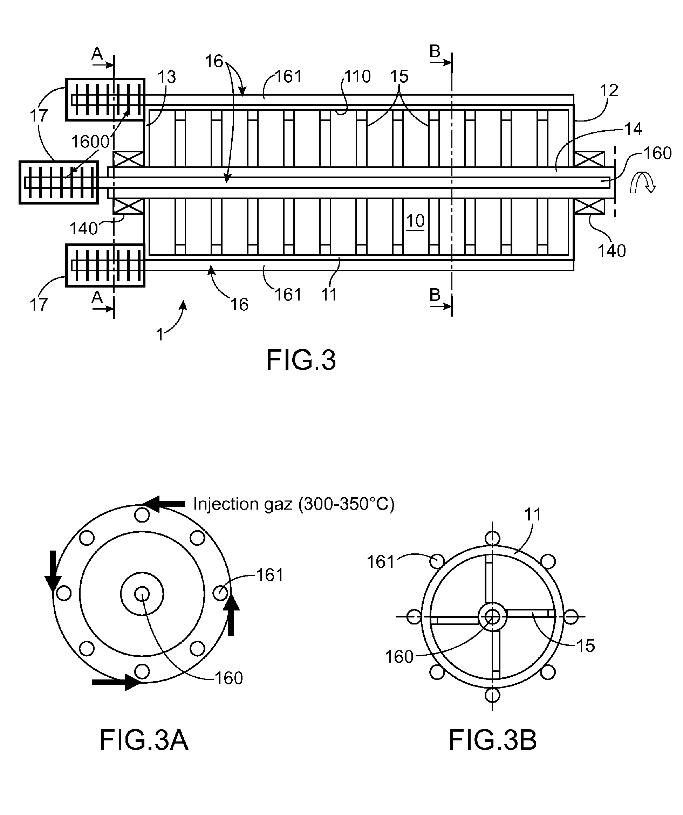

La demande de brevet US 2003/0221363 divulgue, de manière très générale, un traitement de biomasse qui combine une étape de torréfaction avec une étape ultérieure de granulation clairement distincte de la torréfaction. Différentes technologies de chauffage sont citées pour mettre en oeuvre la torréfaction (voir paragraphe [0050] : four à soles multiples avec brûleur intégré de la figure 2 ; vis sans fin chauffante avec brûleur intégré de la figure 3; réchauffeur de lit fluidisé ; four rotatif; four intermittent). De fait, l'ensemble de ces technologies ne sont pas industriellement éprouvées à ce jour. Aucune garantie ne semble apportée sur la bonne tenue mécanique des granulés produits en sortie du compacteur à tambours référencé 30 en figures 2 et 3.

De plus, si l'intégration énergétique semble acquise, notamment du compacteur, immédiatement en aval du réacteur de torréfaction, aucune mention sur les conditions opératoires n'est faite. En particulier, aucune précision n'est donnée sur le temps nécessaire à la torréfaction, paramètre pourtant essentiel à la maîtrise de la torréfaction.

Des études technico-économiques des différents procédés, montrent que la maîtrise du temps de séjour des particules de biomasse pendant le traitement est un critère essentiel d'évaluation des procédés de torréfaction et conditionne directement leur intérêt économique. On peut citer ici la publication [1] qui met bien en évidence ce critère.

Par ailleurs, le retour d'expérience de l'inventeur de la présente invention sur la torréfaction montre que le couple température/temps de séjour de la biomasse, est étroitement lié au type de biomasse utilisé (bois, paille, etc...). Pour une durée de torréfaction donnée, la température est un paramètre ajustable permettant de répondre à la variabilité de la biomasse dans la majorité des cas. Jusqu'à ce jour, le temps de séjour nécessaire à l'étape de torréfaction que l'on peut qualifier d'important, i.e. de l'ordre de 20 à 50 minutes, car directement lié à la taille relativement importantes des particules de biomasse soumises à la torréfaction, typiquement de l'ordre du centimètre.

D'ailleurs, bon nombre de publications mettent à jour la nécessité d'avoir un couple prédéterminé du temps de séjour/température de traitement pour maîtriser la torréfaction en général et en particulier la perte de masse qui en résulte.

Le brevet GB 2448531 présente une technologie de torréfaction dédiée à de la biomasse coupée grossièrement, de l'ordre de 100 mm de longueur par particule, avant d'être broyée et ramenée à une dimension finale de l'ordre de 10 mm par particule torréfiée puis broyée en amont. La torréfaction est réalisée à une température de 300°C pendant une durée de 15 min conduisant à une perte de masse importante, c'est-à-dire d'au moins 40% (voir page 8 lignes 20 à 24). La solution développée selon ce brevet GB 2448531 est uniquement adaptée à une application de co-combustion avec le charbon et ne présente aucune optimisation du temps de traitement de torréfaction. Au contraire, le choix d'utiliser en entrée du procédé de la biomasse coupée grossièrement, de grande dimension, accroît encore le temps nécessaire à la torréfaction.

Il est par ailleurs connu dans d'autres domaines que celui de la biomasse de réaliser une étape de broyage à chaud, c'est-à-dire à des températures comprises entre 100-350°C de la matière à traiter.

Ainsi, il a déjà été envisagé de réaliser une étape de broyage à chaud, à l'aide d'un broyeur à marteaux en particulier pour le traitement des résidus lourds de pétrole type asphalte, tel que décrit dans la demande de brevet WO 2009/114195 A1, ou pour la dégradation de matière plastique, tel que décrit dans la demande de brevet WO 98/09997. Dans cette demande WO 98/09997, la gamme de température indiquée est comprise entre 200-500°C, mais nécessite un préchauffage de la charge avant broyage. La demande de brevet WO 9008177 enfin a trait à la récupération de pétrole dans des boues d'extraction et décrit le fonctionnement d'un broyeur à marteaux à chaud, à une température de l'ordre de 225°C avec régulation de température par bain d'huile pour éviter la dégradation du pétrole pendant l'opération. Il est prévu en outre de faire la séparation de la poussière générée et du gaz au moyen d'un cyclone (voir figure 3). Dans les trois demandes de brevets citées, non seulement il est nullement envisagé de réaliser le broyage à chaud de biomasse, mais aucun enseignement ne peut être tiré pour le faire effectivement. Ainsi, la maîtrise du temps de séjour dans le broyeur considéré n'est pas mentionnée car elle est de fait non essentielle pour leur application considérée.

On connait également de l'art antérieur, la possibilité de réaliser en combinaison une étape de broyage d'une matière et une étape de séchage en une seule opération.

Ainsi, le brevet US 4085897 propose un broyeur-sécheur pour le traitement à priori de tout type de matériaux et en particulier le charbon. Si la solution divulguée est bien adaptée à du séchage avec de l'air, elle est incompatible pour la torréfaction de biomasse qui doit s'opérer avec un minimum d'oxygène pour éviter la combustion de la biomasse lors de sa torréfaction et l'emballement de la réaction.

Le brevet JP 60000899 propose la même approche mais avec de l'air à plus hautes températures, comprises entre 200 et 400°C pour le traitement de boues. La solution divulguée est donc de fait incompatible avec une étape de torréfaction de biomasse. En outre, les températures indiquées sont incompatibles avec une étape de séchage car le faire reviendrait à générer des rejets de COV (Composés Organiques Volatiles) qui doivent être maîtrisés pour respecter les normes environnementales.

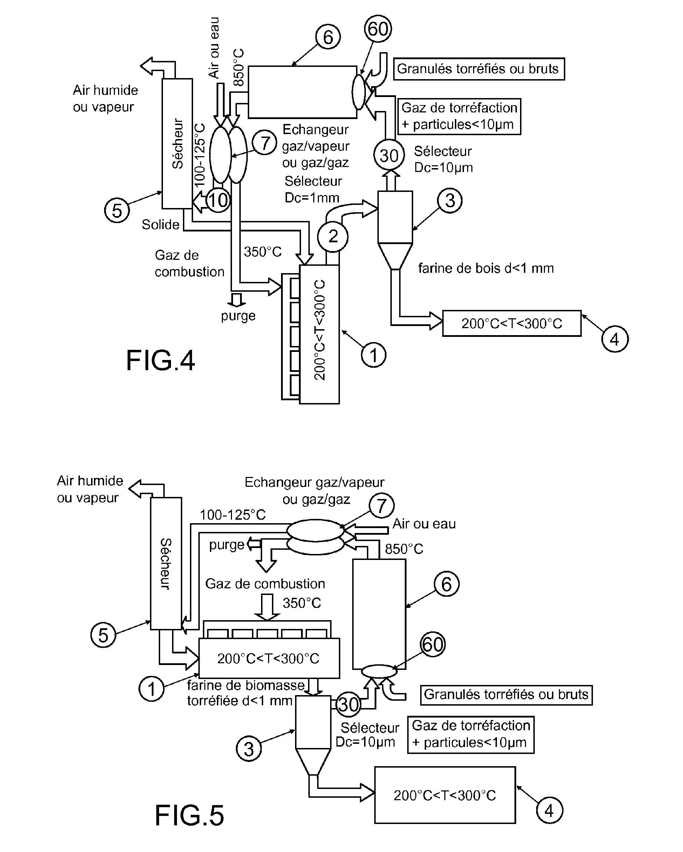

Enfin, il est connu de la demande de brevet FR 2924435A1, la possibilité de réaliser en combinaison une étape de broyage et une étape de torréfaction de biomasse ligno-cellulosique en une seule opération nécessairement mise en oeuvre dans un réacteur à lit fluidisé. L'objectif avéré de cette solution selon la demande FR 2924435 est la réduction de la consommation d'énergie de broyage, et le temps de séjour des particules de biomasse n'est pas une réelle préoccupation. Ainsi, les temps de séjour donnés restent ceux classiquement utilisés jusqu'à ce jour pour une étape de torréfaction, c'est-à-dire des temps importants de 10 à 40 minutes, car ils restent dépendants de la granulométrie en entrée de lit fluidisé des particules (voir page 4 lignes 20-23). Or, comme indiqué en préambule, la maîtrise du temps de séjour des particules pendant le traitement est un critère essentiel d'évaluation des procédés de torréfaction et conditionne directement leur intérêt économique. De plus, à la lecture de cette demande de brevet, on ne sait pas réellement comment la température nécessaire à la torréfaction des particules est fixée, même si à priori elle l'est par le gaz vecteur de mise en mouvement des particules en entrée à travers la tubulure centrale. D'ailleurs, on ne sait pas comment l'énergie nécessaire au chauffage du gaz vecteur est apportée. En outre, de par la conception même de ce réacteur à lit fluidisé, il y a de nombreux échanges thermiques entre d'une part les particules et le gaz vecteur et d'autre part les particules et les organes du broyeur à couteaux mis en oeuvre (voir figure 4). Autrement dit, il n'y a pas de maîtrise des échanges thermiques. Par ailleurs, le broyeur à couteaux mis en oeuvre présente certains inconvénients liés directement à l'étape de torréfaction.

En effet, cette transformation thermochimique modifie les caractéristiques intrinsèques de la biomasse traitée avec en particulier une polymérisation rendant très abrasive la poudre obtenue. On peut en déduire qu'une dégradation (érosion) très rapide des couteaux peut se produire avec en corollaire une dispersion de la granulométrie des particules en sortie et donc un dysfonctionnement progressif de l'installation. Enfin, l'inventeur pense que l'opération de broyage-torréfaction selon cette demande FR 2924435 est difficile à mettre en oeuvre avec en particulier des conditions de pilotage très complexes, compte tenu de la précision donnée sur les vitesses de fluidisation à respecter face à d'une part la grande variabilité de la biomasse traitée (composition, taux d'humidité) et d'autre part la gamme très large en pression couverte (1 à 30 bars). En effet lors de l'opération de torréfaction des gaz sont émis en plus ou moins grande quantité en fonction de la température et du temps de séjour des particules. Ce dégagement de gaz impacte directement la vitesse de fluidisation et donc le fonctionnement du lit fluidisé.

Un but de l'invention est donc de proposer une solution mettant en oeuvre une étape de torréfaction et une étape de broyage de biomasse lors d'une seule opération, c'est-à-dire, dans une chambre unique d'un réacteur et qui pallie tout ou partie des inconvénients de la demande de brevet FR 2924435.

Un but particulier est donc de proposer une solution d'adaptation d'une technologie de broyeur existante pour mettre en oeuvre concomitamment un broyage et une torréfaction, en maîtrisant les échanges thermiques dans des temps de séjour des particules dans la chambre du broyeur considérablement réduits, de préférence inférieurs à 5 minutes. En effet, des essais réalisés sur des particules de biomasse de très petites tailles, de l'ordre de 200µm, montrent que les conditions optimales de torréfaction (perte de masse, contenu énergétique) peuvent être obtenues pour des temps de séjour inférieurs à 5 minutes en fonction de la température.

Un autre but de l'invention est de proposer une installation de traitement de biomasse intégrant un réacteur mettant en oeuvre concomitamment un broyage et une torréfaction et comprenant une presse à granuler en aval du réacteur, et dont le bilan énergétique soit performant.

### EXPOSÉ DE L'INVENTION

Pour ce faire, l'invention concerne un réacteur de broyage et de torréfaction de biomasse, comprenant :
- une chambre délimitée intérieurement par des parois internes;
- des moyens de broyage, agencés à l'intérieur de la chambre, et adaptés pour broyer de la biomasse, de préférence ligno-cellulosique ;
- des moyens de chauffage adaptés pour chauffer et maintenir en température par conduction thermique au moins une partie des moyens de broyage et au moins une partie des parois internes de la chambre à une température prédéterminée, dite de torréfaction, comprise entre 200°C et 350°C afin de réaliser simultanément le broyage et la torréfaction de biomasse au sein de la chambre.

L'invention porte également sur un réacteur de broyage et de torréfaction de biomasse, comprenant :
- une chambre délimitée intérieurement par des parois internes;
- des moyens de broyage agencés à l'intérieur de la chambre, comportant un arbre central rotatif monté en rotation dans la chambre et des éléments de broyage présents sur ledit arbre central rotatif pour broyer contre les parois internes de la biomasse, de préférence ligno-cellulosique, présente à l'intérieur de la chambre ;
- des moyens de chauffage pour chauffer et maintenir par conduction thermique par l'intermédiaire des moyens de broyage la biomasse présente à l'intérieur de la chambre, à une température prédéterminée dite de torréfaction comprise entre 200°C et 350°C, afin de réaliser simultanément le broyage et la torréfaction de la biomasse dans la chambre.

L'invention met en oeuvre une action combinée d'un broyage et d'un traitement thermique de torréfaction qui permet une réduction de la taille des particules et donc le temps de traitement des particules, dit temps de séjour dans un environnement variant de 200 à 350°C.

L'invention consiste essentiellement à réaliser une torréfaction rapide par la synergie entre les moyens du broyeur, ses conditions de fonctionnement et les conditions opératoires de la torréfaction.

Grâce à l'invention, on peut envisager la maîtrise d'un temps de séjour court et de la température pour l'opération de torréfaction.

L'invention apporte un gain en compacité et en optimisation énergétique considérable vis-à-vis d'une configuration séquentielle des opérations torréfaction et broyage avant granulation.

L'inventeur est parti du constat que le traitement thermique de torréfaction est étroitement lié à la température propre des particules, et donc du constat qu'il faut maîtriser au mieux le traitement thermique, c'est-à-dire maîtriser le mode d'injection de l'énergie et maximiser les coefficients d'échanges entre les particules de biomasse à torréfier et les parties chaudes en contact.

L'inventeur a alors fait l'inventaire des différents modes de transferts thermiques tels qu'ils sont connus: ces modes que sont la convection, le rayonnement, et la conduction dépendent étroitement de la configuration d'échange, c'est-à-dire de la nature des éléments en contact, comme cela ressort de la figure 1. De cette figure 1, on voit que les échanges thermiques entre gaz et solide sont les plus faibles ; les échanges solide/solide sont très supérieurs mais étroitement limités par la résistance de contact entre les solides, enfin les échanges entre solide et liquide sont encore meilleurs et atteignent un maximum lors du changement de phase du liquide (ébullition), comme cela est décrit dans la publication [2].

Pour atteindre une maîtrise du traitement thermique, la solution proposée dans le brevet FR 2924435 mentionnée en préambule, consiste en un broyeur à couteaux associé à un lit fluidisé. A partir d'une comparaison non exhaustive des différents types de broyeur comme schématisé sur le diagramme de la figure 2, il apparaît qu'une solution de broyeur à couteaux et en lit fluidisé comme celle de la demande FR 2924435 est celle qui nécessite le plus de débit de gaz de balayage. En outre, comme montré en figure 1, cette solution met en oeuvre des coefficients d'échanges thermiques faibles (échanges gaz/solide essentiellement).

L'idée à la base de l'invention est donc de maximiser le transfert d'énergie aux particules de biomasse tout en maîtrisant au mieux la température de torréfaction. A l'encontre des solutions proposées pour la torréfaction de la biomasse selon l'état de l'art, l'inventeur a donc pensé à s'affranchir du gaz pour apporter l'énergie thermique directement aux particules par l'intermédiaire des éléments constitutifs du broyeur et plus particulièrement par l'intermédiaire des moyens de broyage. Autrement dit, l'inventeur a pensé à adapter une technologie de broyeur existante en favorisant au maximum les échanges thermiques solide/solide, c'est-à-dire en réduisant au plus les résistances de contact entre moyens de broyage (marteaux, couteaux ou corps broyant) à l'intérieur de la chambre et particules de biomasse.

Autrement dit, l'invention consiste à apporter l'énergie de torréfaction aux particules composant la biomasse via les moyens de broyage qui sont chauffés par contact direct par les moyens de chauffage.

De préférence, les moyens de broyage et les parois internes de la chambre présentent des conductivités thermiques sensiblement identiques.

Avantageusement, lorsque le matériau des parois internes est choisi parmi l'acier ou l'acier inoxydable 304L, alors celui des moyens de broyage peut être choisi parmi les aciers durs, tels que l'acier 350HB. Les parois internes de la chambre de réacteur peuvent être revêtues d'un matériau de blindage, tel que le CREUSABRO^{©}, qui convient dans le cadre de l'invention. Les moyens de chauffage consistent avantageusement en des éléments caloducs en contact physique avec la paroi périphérique de la chambre.

Selon le type des moyens de broyage considéré, on peut en outre envisager au moins un élément caloduc en contact physique avec au moins une partie des moyens de broyage.

Outre le gain considérable sur les échanges de chaleur, le fait de mettre en contact des éléments caloducs avec la paroi périphérique de la chambre (carcasse) et/ou avec les moyens de broyage présents sur l'arbre central rotatif, permet de garantir le maintien précis de la température de torréfaction lors du broyage des particules de biomasse et éventuellement en tout point du réacteur. On maximise ainsi l'apport d'énergie tout en maîtrisant finement la température du procédé de torréfaction/broyage.

Il est avantageux de répartir les caloducs autour de la carcasse de la chambre, leur nombre dépendant bien évidemment des dimensions de la chambre.

Typiquement, en première approche, on répartit les caloducs tous les 40 à 50 cm si la carcasse de la chambre est en acier doux. Ainsi, de préférence, on prévoit une pluralité d'éléments caloducs répartis uniformément à la périphérie et en contact physique contre la paroi périphérique de la chambre sur au moins une majeure partie de sa longueur.

Pour garantir le maintien en température des moyens de broyage tournants (couteaux, marteaux), on prévoit avantageusement un élément caloduc agencé à l'intérieur d'un arbre central sur lequel sont fixés ou présents au moins une partie des moyens de broyage, l'arbre étant monté en rotation dans la chambre sur au moins une majeure partie de sa longueur. Compte tenu des tailles usuellement rencontrées pour les moyens de broyage, tels que les marteaux, et la nature de leur(s) matériau(x), typiquement l'acier, la conduction dans ce(s) matériau(x) permet de garantir un faible écart de Ture entre les moyens de broyage tournant (marteaux, couteaux) et l'arbre rotatif sur lequel ils sont fixés : typiquement, on peut obtenir un écart inférieur à 2°C pour une conductivité de 45W/m²°C sur une longueur de 40 cm avec un flux de 225 W/m².

A des fins d'intégration énergétique dans une installation de traitement de biomasse et afin d'augmenter les échanges thermiques, les éléments caloducs selon l'invention sont chacun munis au moins à une de leur extrémité d'ailettes pour constituer un échangeur thermique entre un gaz et le fluide caloporteur à l'intérieur dudit caloduc.

En ce qui concerne le choix du fluide caloporteur des caloducs selon l'invention, l'inventeur a fait l'inventaire de ceux actuellement connus. Le tableau 2 récapitulatif extrait de la publication [3] donne une vue exhaustive. Dans le cadre de l'invention, l'inventeur pense que le Gilotherm^{®} DO et le Naphtalène sont les mieux adaptés pour répondre aux conditions opératoires du réacteur selon l'invention. Bien entendu, l'homme de l'art pourra choisir d'autres fluides caloporteurs dans les caloducs avec d'autres matériaux de chambre en fonction des applications envisagées (type de biomasse à traiter).

Une solution alternative aux caloducs mentionnés ci-dessus peut consister à utiliser un fluide caloporteur circulant dans les différentes parties du broyeur nécessitant que leur température soit contrôlée, par exemple dans les éléments de broyage présents sur l'arbre central rotatif monté en rotation dans la chambre et/ou l'arbre lui-même. Le réacteur peut alors comporter une pompe hydraulique permettant d'adapter le débit du fluide caloporteur dans les éléments précédents en fonction de la température souhaitée.

En ce qui concerne la technologie de broyeurs à adapter dans le cadre de l'invention, l'inventeur pense que deux types de broyeur présentent des caractéristiques particulièrement bien adaptées à l'opération de torréfaction : le broyeur à marteaux et le broyeur vibrant.

Le broyeur à marteaux offre une capacité d'échange thermique très importante par l'action directe du marteau et de la calandre (carcasse) sur les particules de biomasse. Il est ainsi préférable de réaliser un préchauffage de la calandre (carcasse du réacteur) et des marteaux du broyeur et également d'injecter un gaz préchauffé. Un autre avantage du broyeur à marteaux concerne sa résistance à l'abrasion et son aptitude déjà éprouvée à traiter de la biomasse (classiquement utilisé pour produire de la farine de bois en amont des unités de granulation).

Ainsi, selon un premier mode de réalisation, les moyens de broyage comprennent des marteaux fixés sur un arbre central monté en rotation dans la chambre, les marteaux étant adaptés pour percuter et éclater les particules de biomasse contre la paroi interne périphérique de la chambre, dite carcasse, en constituant ainsi un broyeur de type à marteaux. Selon ce premier mode de réalisation, on prévoit de monter un élément caloduc à l'intérieur de l'arbre central, le montage permettant à l'élément caloduc également d'être en rotation avec l'arbre. On améliore ainsi d'autant plus l'efficacité du caloduc par l'effet de centrifugation du liquide contenu dans le caloduc qui vient donc se répartir sur les parois du tube de celui-ci.

Pour maîtriser et ajuster le temps de séjour des particules de biomasse dans le broyeur à marteaux, on peut prévoir deux variantes en fonction de la position en configuration installée du réacteur. Par position en configuration installée, on entend la position que le réacteur selon l'invention occupe lorsqu'il fonctionne, c'est-à-dire lorsqu'il met en oeuvre une opération simultanée de broyage et de torréfaction de biomasse.

Lorsque le réacteur/broyeur à marteaux selon l'invention est installé avec son axe longitudinal à la verticale, l'utilisation d'un premier sélecteur dynamique à vitesses variable est préférée.

L'avantage principal apporté par un sélecteur dynamique est sa grande flexibilité de sélection et d'ajustement de la taille des particules à la sortie réacteur en faisant varier sa vitesse de rotation (ajustement possible en fonction du type de biomasse traitée).

Lorsque le réacteur/broyeur à marteaux selon l'invention est installé avec son axe longitudinal à l'horizontal, on réalise de préférence une aspiration des particules en aval du réacteur, comme expliqué ci-après: on réduit ainsi considérablement la distribution granulométrique dans le réacteur et on améliore son rendement.

D'autres technologies de broyeur présentent des caractéristiques avantageuses pour réaliser l'opération combinée de broyage et de torréfaction selon l'invention. Comme évoqué ci-dessus, le broyeur vibrant a intrinsèquement d'excellentes propriétés: broyage à faible consommation énergétique, distributions granulométriques étroites, peu d'envol de particules réduisant le risque d'atmosphères explosives (réglementation ATEX issue des directives européennes) et enfin, une maîtrise du temps de séjour par une vanne de laminage en sortie de broyeur.

Selon un deuxième mode de réalisation, les moyens de broyage sont constitués par des corps de broyage montés libres à l'intérieur de la chambre, et le réacteur comprend des moyens de mise en vibration de la chambre, les moyens de vibration de la chambre contre les corps de broyage étant adaptées pour concasser les particules de biomasse d'une part entre les corps de broyage et d'autre part entre ceux-ci et la paroi interne périphérique de la chambre, dite carcasse, en constituant ainsi un broyeur de type vibrant. Les moyens de vibration sont de préférence associés à des contre poids pour adapter la fréquence de vibration. Dans le cadre de l'invention, on peut adapter certains broyeurs de type vibrant déjà existants afin de mettre en oeuvre simultanément l'étape de torréfaction. Par exemple, des broyeurs vibrants commercialisés sous la dénomination commerciale PALLA au nom de la société RITEC sont parfaitement adaptés. Avec ce type de broyeurs, on peut aussi bien envisager des barres ou cylpebs à l'intérieur de la chambre en tant que corps broyants.

Selon ce deuxième mode de réalisation, les moyens de chauffage consistent avantageusement en des éléments caloducs uniquement répartis à la paroi périphérique de la chambre, les échanges thermiques d'une part entre la carcasse de chambre et les corps broyants et d'autre part entre les corps broyants entre eux permettant de transmettre au mieux la chaleur aux particules de biomasse.

Du fait de sa plus grande sensibilité au taux d'humidité du produit entrant et aux pertes de masse accrue lors d'opération de torréfaction poussée, on privilégie le second mode de réalisation pour des biomasses séchées avec un faible taux d'humidité.

L'utilisation d'un premier sélecteur dynamique à vitesse variable selon ce second mode de réalisation est également avantageuse. De préférence, l'agencement du premier sélecteur dynamique est tel qu'il est placé en partie haute du réacteur, de préférence encore dans le dernier tiers du tube de broyage qui permet d'évacuer les gaz produits (gaz de torréfaction + vapeur d'eau). On garantit ainsi un fonctionnement du réacteur comme usuellement pour un broyeur vibrant.

L'invention concerne donc aussi un système comprenant un réacteur de broyage et de torréfaction de biomasse décrit précédemment et un premier sélecteur dynamique à vitesse variable immédiatement en aval du réacteur, ledit premier sélecteur dynamique étant adapté pour obtenir en sortie du réacteur des particules inférieure à un premier diamètre souhaité et pour réinjecter dans le broyeur les particules de diamètre supérieur au premier diamètre souhaité.

On peut enfin envisager d'adapter une technologie de broyeur à couteaux. Selon un troisième mode de réalisation, les moyens de broyage comprennent ainsi des encoches pratiquées sur un arbre central monté en rotation dans la chambre, les encoches étant adaptées pour couper les particules de biomasse contre la paroi interne périphérique de la chambre, dite carcasse, en constituant ainsi un broyeur de type à couteaux.

Tout comme le premier mode de réalisation, on prévoit de monter un élément caloduc à l'intérieur de l'arbre central, le montage permettant à l'élément caloduc également d'être en rotation avec l'arbre. On améliore ainsi d'autant plus l'efficacité du caloduc par l'effet de centrifugation du liquide contenu dans le caloduc qui vient donc se répartir sur les parois du tube de celui-ci.

L'invention concerne aussi un procédé de mise en oeuvre d'un réacteur ou d'un système décrit précédemment, selon lequel on préchauffe les moyens de chauffage jusqu'à ce qu'ils atteignent la température prédéterminée de torréfaction, comprise entre 200°C et 350°C, avant l'alimentation du réacteur en biomasse séchée.

De préférence, l'alimentation en biomasse séchée est faite avec un taux d'humidité de celle-ci dans une gamme de 10 à 15%. Ce taux est avantageux car il dégrade peu ou prou le rendement énergétique global du procédé de torréfaction selon l'invention. On réalise de préférence l'alimentation en biomasse séchée dans le réacteur par gravité.

En cas d'apport important d'énergie à réaliser, on injecte en outre un flux de gaz portés à la température prédéterminée de torréfaction directement dans la chambre.

Comme indiqué plus haut, lorsque le réacteur est en position horizontale en configuration d'utilisation, on réalise de préférence une aspiration des particules en aval dudit réacteur.

L'invention concerne enfin une installation de traitement de biomasse, de préférence ligno-cellulosique, pour réaliser des biocombustibles sous forme de granulés. Ainsi l'installation comprend un réacteur ou un système décrit précédemment et une presse à granuler et en outre un deuxième sélecteur dynamique relié en aval au réacteur, et le cas échéant au premier sélecteur dynamique, le deuxième sélecteur dynamique étant adapté pour séparer des particules en sortie du réacteur et ayant un diamètre inférieur au premier diamètre, celles dont le diamètre est supérieur à un deuxième diamètre souhaité, l'une des sorties du deuxième sélecteur dynamique étant reliée à la presse à granuler pour l'alimenter en particules de dimension comprise entre le premier et deuxième diamètre, l'autre des sorties du deuxième sélecteur dynamique étant adaptée pour extraire les particules de dimension inférieure au deuxième diamètre souhaité. Le deuxième diamètre souhaité correspond à de très fines particules de biomasse, typiquement de diamètre apparent inférieur à 10 µm. Le deuxième sélecteur dynamique est de préférence associé à un cyclone : le cyclone est ainsi agencé entre le deuxième sélecteur dynamique et la presse à granuler. En ce qui concerne la presse à granuler, on choisit une presse fonctionnant aux températures de torréfaction, soit entre 200 et 300°C, ce qui permet l'obtention de granulés avec une consommation énergétique réduite et une très bonne tenue mécanique des granulés. Par exemple, des presses à granuler commercialisés par la société Promill-Stolz sont parfaitement adaptées.

A des fins d'intégration énergétique, la sortie du deuxième sélecteur dynamique adaptée pour extraire les particules de dimension inférieure au deuxième diamètre souhaité est reliée à une chambre de combustion distincte de la chambre de réacteur, adaptée pour réaliser une post-combustion des gaz issus de la torréfaction et des particules de dimension inférieure au deuxième diamètre à une température prédéterminée, dite de post-combustion, comprise entre 800 et 1000°C, de préférence égale à 850°C. Autrement dit, le gaz issu du réacteur chargé en fines particules de biomasse torréfié est utilisé comme combustible dans une chambre de post combustion fonctionnant de préférence à 850°C.

On veille alors à ajuster la vitesse du deuxième sélecteur dynamique pour obtenir une autosuffisance en énergie pour la chambre de post combustion en régime permanent. Autrement dit encore, l'ajustement du PCI (abrégé de Pouvoir Calorifique Inférieur) du gaz plus les particules est asservi à la vitesse du deuxième sélecteur dynamique.

Avantageusement, la chambre de combustion comprend au moins un brûleur multi-combustible pour simultanément réaliser une post-combustion des gaz issus de la torréfaction et des particules de dimension inférieure au deuxième diamètre et des combustibles de matière solide. Le brûleur multi-combustible est avantageusement relié à la presse à granuler de sorte que les combustibles de matière solide sont des granulés torréfiés produits par ladite presse à granuler. Un tel brûleur permet un ajustement rapide et précis de la température de la post combustion dans les phases transitoires (mise en régime, oscillations) par la combustion de granulés et de préférence produits par la presse à granuler. En tant que brûleurs multi combustible susceptibles d'être utilisés dans le cadre de l'invention, on peut citer ceux commercialisés par la société Leroux et Lotz Technologie.

Ainsi, avantageusement, la sortie de la chambre de combustion est reliée au réacteur de sorte à chauffer les moyens de chauffage par les gaz de post-combustion.

Selon une caractéristique, la sortie de la chambre de combustion est reliée à l'entrée du réacteur de sorte à injecter les gaz de post-combustion, à la température de torréfaction, dans la chambre de réacteur.

Selon une autre caractéristique, la sortie de la chambre de combustion est reliée aux échangeurs thermiques constitués par les ailettes des caloducs de sorte que l'énergie de chauffage du fluide caloporteur des caloducs est apportée par les gaz de post-combustion.

Selon un mode de réalisation avantageux, l'installation comprend en outre un échangeur thermique supplémentaire, distinct des échangeurs thermiques des caloducs, dont le circuit de fluide chaud est relié à la sortie de la chambre de combustion et dont le circuit de fluide froid est relié à un sécheur adapté pour sécher la biomasse avant son alimentation dans le réacteur, de sorte que l'énergie de chauffage du sécheur est apportée par les gaz de post-combustion.

Autrement dit, les gaz de combustion sortant de la chambre de post combustion parviennent sur l'échangeur thermique supplémentaire pour d'une part préchauffer soit de la vapeur d'eau soit un gaz et l'envoyer dans le sécheur de biomasse, et d'autre part pour ajuster la température des gaz de post-combustion à une valeur variable suivant la biomasse traitée, typiquement comprise entre 250 et 350 °C, et l'injecter dans la chambre du réacteur. En utilisant l'échangeur thermique supplémentaire dans l'installation de traitement de biomasse selon l'invention, on maîtrise encore mieux la température de torréfaction dans l'échangeur qui tend à stabiliser le procédé de torréfaction/broyage.

### BRÈVE DESCRIPTION DES DESSINS

D'autres avantages et caractéristiques de l'invention ressortiront mieux à la lecture de la description détaillée de l'invention faite à titre illustratif et non limitatif en référence aux figures suivantes parmi lesquelles :
- la figure 1 est un diagramme montrant les niveaux de coefficient d'échange thermique en fonction des fluides ou solides en contact mutuel ;
- la figure 2 est un diagramme montrant les débits de gaz de balayage nécessaires en fonction de la technologie de broyeurs utilisés selon l'état de l'art ;
- la figure 3 est une vue schématique en coupe longitudinale d'un réacteur de broyage et de torréfaction de biomasse selon l'invention mettant en oeuvre une technologie de broyeur à marteaux ;
- les figures 3A et 3B sont des vues schématiques en coupe transversale du réacteur selon la figure 3 ;
- la figure 4 est une vue schématique d'un premier mode de réalisation d'une installation de traitement de biomasse intégrant un réacteur de broyage et de torréfaction de biomasse selon l'invention ;
- la figure 5 est une vue schématique d'un deuxième mode de réalisation d'une installation de traitement de biomasse intégrant un réacteur de broyage et de torréfaction de biomasse selon l'invention.

### EXPOSÉ DÉTAILLÉ DE MODES DE RÉALISATION PARTICULIERS

Dans la description qui va suivre les termes « entrée », « sortie » « amont », « aval » sont utilisés en référence à la direction de transfert de la biomasse et des fluides à la fois dans le réacteur selon l'invention, dans un système et une installation intégrant un tel réacteur. De même, les termes « supérieur », « inférieur », « au dessus », « au dessous » sont utilisés par référence à l'orientation physique verticale ou horizontale du réacteur et du sécheur de l'installation selon l'invention.

Par diamètre des particules, on entend leur diamètre équivalent, c'est-à-dire le diamètre de la sphère qui se comporterait de manière identique lors d'une opération d'analyse granulométrique choisie.

Les figures 1 et 2 ont été commentées ci-dessus. Elles ne sont donc pas commentées plus ici.

En figures 3 à 3B, on a représenté un réacteur de broyage et de torréfaction concomitante de biomasse ligno-cellulosique, telle que du bois, conformément à l'invention.

Le réacteur 1 selon l'invention comprend une chambre 10 unique délimitée à sa périphérie cylindrique par une paroi latérale, usuellement appelée carcasse 11, et respectivement de part et d'autre par deux parois d'extrémité 12, 13.

Le réacteur 1 représenté est réalisé à partir d'un broyeur à marteaux. Ainsi, le réacteur comprend un arbre central rotatif 14 monté sur des paliers 140 agencés à l'extérieur de la chambre 1.

Une pluralité de marteaux 15 est fixée sur l'arbre rotatif 14 en définissant des étages régulièrement espacés le long de la chambre. Chaque étage comprend également un nombre de marteaux 15 répartis angulairement régulièrement.

Comme visible en figures 3 et 3B, il est ainsi prévu un nombre de onze étages le long de la chambre, chaque étage comprenant un nombre de quatre marteaux positionnés de 15° à 90° les uns des autres.

Ainsi, lorsque de la biomasse, séchée préalablement à un taux d'humidité de préférence compris entre 10 et 15%, est alimentée dans le réacteur 1, les marteaux 15 en rotation par l'intermédiaire de l'arbre 14 viennent percuter et éclater les particules de biomasse contre la paroi interne 110 périphérique de la chambre.

Selon l'invention, afin de réaliser simultanément le broyage et la torréfaction de biomasse au sein de la chambre 10, tout en maîtrisant au mieux les échanges thermiques entre les différents éléments du réacteur (carcasse, marteaux, arbre rotatif) et les particules de biomasse à torréfier, on prévoit d'implanter des caloducs 16 adaptés pour chauffer et maintenir en température par conduction thermique les marteaux 15 et l'arbre rotatif 14 sur lequel ils sont montés et la carcasse 11 de la chambre à une température prédéterminée, dite de torréfaction, comprise entre 200°c et 350°C.

Plus exactement, un premier caloduc 160 est inséré à l'intérieur de l'arbre rotatif 14. Le montage prévu est tel que le caloduc 16 concerné tourne avec l'arbre 14. On améliore ainsi encore davantage l'efficacité du caloduc 160 par effet de centrifugation du liquide qu'il contient, ce dernier venant se répartir sur toute la paroi interne du caloduc lors de la rotation.

Comme mieux représenté en figures 3A et 3B, des deuxièmes caloducs 161 sont en contact physique avec la carcasse 11 du réacteur. Ces deuxièmes caloducs 161 sont répartis régulièrement angulairement.

Comme visible en figures 3A et 3B, il est ainsi prévu un nombre de huit caloducs 161 sur le pourtour de la chambre et toute la hauteur de celle-ci, les huit caloducs 161 étant distants à 45° les uns des autres.

Comme visible en figure 3, les extrémités 1600 des caloducs comprennent des ailettes afin de constituer un échangeur thermique optimal entre un gaz chaud circulant dans chaque cavité 17 et le fluide caloporteur à l'intérieur de chaque caloduc. Ce fluide caloporteur est de préférence du napthtalène ou du Gilotherm^{®} DO.

En outre, selon l'invention, le dimensionnement du réacteur 1 tient compte essentiellement de l'ajustement du temps de séjour nécessaire pour les particules de la biomasse considérée. Cet ajustement dépend de deux paramètres: la température effective de la paroi interne 110 de la carcasse 11, de l'arbre rotatif 14, des marteaux 15 en contact physique avec les particules de biomasse, et de la taille des particules. Le réglage peut-être différent suivant le type de biomasse utilisé et nécessite en fonction de la configuration installée du réacteur 1, de moyens appropriés en aval du réacteur.

Ainsi, lorsque le réacteur 1 qui vient d'être décrit est en position verticale en configuration installée, l'implantation d'un premier sélecteur dynamique 2 adapté pour forcer les particules de gros diamètre à séjourner dans le réacteur plus longtemps afin de combiner la réduction de taille par broyage et le traitement thermique de torréfaction.

Cette configuration est montrée en figure 3. On calibre ainsi les particules broyées et torréfiées en sortie du réacteur par le premier sélecteur dynamique 2 à vitesse variable. Typiquement, la vitesse de rotation est comprise entre 2000 et 4000 tr/mn pour calibrer des particules en sortie de diamètre de l'ordre de 500 µm. En figure 4, on a mentionné des particules en sortie calibrées à un diamètre de 1 mm. L'utilisation du premier sélecteur dynamique 2 nécessite un gaz vecteur permettant le transport de la poudre (particules de biomasse agglomérées) et le maintien en température de cette dernière.

Lorsque le réacteur 1 qui vient d'être décrit est en position horizontale en configuration installée, on réalise une aspiration en aval du réacteur 1 à l'aide d'un ventilateur non représenté et au travers d'un cyclone 3, ce qui réduit considérablement la distribution granulométrique à l'intérieur de la chambre 10 et améliore le rendement du réacteur. Autrement dit, on peut s'affranchir du premier sélecteur dynamique 2. Cette configuration est représentée en figure 5. On a d'ailleurs mentionné sur cette figure, des particules de biomasse (farine de biomasse torréfiée) calibrées à un diamètre de 1 mm.

On a fait des tests préliminaires, selon une analyse ATG (abrégé d'Analyse Thermo Gravimétrique), sur de petites particules pour valider la mise en oeuvre du réacteur 1 selon l'invention et définir les conditions de son dimensionnement. Les résultats obtenus sur du bois dur (hêtre) montrent que le temps de séjour minimum pour des tailles de particules de 200µm à une température de 280°C doit être de 1 mn.

En figures 4 et 5, on a représenté une installation complète de traitement de biomasse intégrant le réacteur 1 selon l'invention et permettant de produire des granulés grâce à une presse à granuler.

Les deux installations représentées sont prévues pour avoir une moindre consommation énergétique.

A l'exception du premier sélecteur dynamique 2 qui vient d'être décrit et de la configuration installée du réacteur 1 (position verticale en figure 4; position horizontale en figure 5) les deux installations comprennent les mêmes éléments avec les mêmes fonctions et agencement relatifs. Aussi, une seule description détaillée est faite pour les deux configurations distinctes.

Tel que mentionné, l'installation en figure 4 est plutôt destinée à produire des granulés avec la presse 4 à partir de farine de bois torréfiée dont les particules ont un diamètre inférieur à 1 mm, tandis que l'installation en figure 5 est plutôt destinée à produire des granulés avec la presse 4 à partir de farine de biomasse torréfiée dont les particules ont un diamètre inférieur à 1 mm.

De la biomasse est séchée préalablement dans un sécheur 5 à une température de préférence comprise entre 100 et 125°C. Cette biomasse séchée alimente par gravité le réacteur de torréfaction et de broyage selon l'invention 1, celui-ci étant préchauffé.

Dans la position verticale en configuration installée du réacteur 1 (figure 4), on prévoit en aval de ce dernier un cyclone 3 en série avec un deuxième séparateur dynamique 30. Le cyclone alimente d'une part, sous l'effet de la gravité, la presse à granuler 4 par les particules broyées, torréfiés et calibrées en sortie du réacteur 1 et d'autre part sous l'effet du vortex ascendant, une chambre 6 de post-combustion par les particules les plus fines (diamètre inférieur à 10 µm) en sortie du cyclone 3. Ce deuxième sélecteur dynamique 30 permet d'ajuster la quantité de poussières de biomasse torréfiée entrainée, et de préférence est installé en partie haute du cyclone/séparateur 3. Typiquement, la vitesse de rotation de ce deuxième séparateur 30 est de l'ordre de 10000 tr/mn pour des particules de 10 µm. Ce deuxième sélecteur dynamique 30 permet d'ajuster le PCI (Pouvoir Calorifique Inférieur) du gaz de torréfaction par enrichissement en solide torréfié avant d'alimenter la chambre 6 de post-combustion, plus exactement son brûleur 60 et donc d'en maîtriser la température. Cette chambre 6 de post combustion a comme fonction principale la destruction des goudrons générés par la torréfaction (acide acétique, acide formique ...).

La chambre de combustion 6 comprend un bruleur multi-combustible 60 qui permet de faire une combustion mixte à la fois des gaz de torréfaction dans lesquelles les particules les plus fines séparées 30 par le cyclone 3 sont en suspension et de granulés solides. La température de combustion est de l'ordre de 850°C. Comme mentionné sur les figures 4 et 5, les granulés solides alimentant le brûleur mixte 60 peuvent être torréfiés ou bruts et de manière avantageuse, ils sont produits par la presse à granuler 4.

Enfin un échangeur thermique 7 est agencé en aval de la chambre de post-combustion 6. Plus exactement, le circuit de fluide chaud est relié à la sortie de la chambre de combustion 6 et le circuit de fluide froid est relié au sécheur 5 précité.

Comme mentionné sur les figures 4 et 5, l'échangeur thermique peut être de type gaz/gaz ou gaz/vapeur d'eau. Plus exactement encore, le circuit de fluide chaud est relié d'une part à l'intérieur de la chambre 10 du réacteur selon l'invention et d'autre part aux cavités 17 dans lesquelles sont logées les ailettes 1600 d'échangeur thermique des caloducs 16 (figure 3).

Ainsi dans les installations de traitement complète de biomasse qui viennent d'être décrites, l'énergie nécessaire à l'opération de torréfaction est apportée par deux moyens de transfert thermique distincts: d'une part par conduction thermique par la calandre externe (carcasse 11) du réacteur 1 préchauffée par le gaz produit par la post combustion dans la chambre de combustion 6 et, le cas échéant par l'arbre central et les moyens broyants, homogénéisée par les caloducs (composants à changement de phase), et d'autre part par l'injection directe du gaz chaud produit par la post combustion dans la chambre 6, à l'intérieur de la chambre 10 de réacteur 1. Le réglage de la température des gaz est assuré par l'échangeur thermique 7, ce qui permet avec le chauffage par les caloducs d'ajuster de manière très précise la température de torréfaction.

Comme évoqué ci-dessus, suivant la technologie de broyeur utilisé dans le réacteur 1 selon l'invention, on peut envisager de faire des apports d'énergie complémentaires. Par exemple, pour des installations de grosse capacité (débit supérieur à 3t/h), on peut envisager de préchauffer les marteaux.

Bien que non représenté, il est envisageable de découpler les apports d'énergie. Ainsi, on peut envisager d'apporter l'énergie de chauffage du fluide caloporteur pour les caloducs par une combustion de granulés torréfiés indépendante et d'utiliser la totalité de l'énergie des gaz produits par la post combustion dans la chambre de combustion 6 pour réaliser le séchage dans le sécheur 5.

Selon cette alternative, on peut également obtenir une meilleure maîtrise de la température de torréfaction dans le réacteur 1, la totalité de l'énergie de post-combustion étant dédiée au séchage.

Bien que la seule application illustrée du réacteur 1 selon l'invention soit la réalisation de granules de biocombustibles, on peut également envisager d'autres applications de production de bio carburant. Dans ces dernières applications, on peut alors installer le réacteur de torréfaction et de broyage selon l'invention directement en amont d'une unité de conditionnement/stockage de la poudre torréfiée elle-même en amont d'un réacteur de gazéification.

### Références citées

[1]: Torrefaction of wood , part1 Weight loss kinetics (Mark J. Prins & al) march 2006, JAA77 (Journal of Analytical and Applied Pyrolysis), pp 28-34.
[2]: Heat transfer Handbook d'Adrian Bejan et Alland D. Kraus;
[3] : Caloduc - Techniques de l'ingénieur [B9 545].

## Revendications

1. Réacteur (1) de broyage et de torréfaction de biomasse, comprenant :
- une chambre (10) délimitée intérieurement par des parois internes (110) ;
- des moyens de broyage agencés à l'intérieur de la chambre (10), comportant un arbre central rotatif (14) monté en rotation dans la chambre (10) et des éléments de broyage présents sur ledit arbre central rotatif (14) pour broyer contre les parois internes (110) de la biomasse, de préférence ligno-cellulosique, présente à l'intérieur de la chambre (10) ;
- des moyens de chauffage (16, 160, 161, 1600, 17) pour chauffer et maintenir par conduction thermique par l'intermédiaire des moyens de broyage la biomasse présente à l'intérieur de la chambre (10), à une température prédéterminée dite de torréfaction comprise entre 200°C et 350°C, afin de réaliser simultanément le broyage et la torréfaction de la biomasse dans la chambre (10).

2. Réacteur de broyage et de torréfaction de biomasse selon la revendication 1, dans lequel les moyens de broyage et les parois internes de la chambre présentent des conductivités thermiques sensiblement identiques.

3. Réacteur de broyage et de torréfaction de biomasse selon l'une des revendications précédentes, dans lequel les moyens de chauffage consistent en des éléments caloducs (16, 160, 161) en contact physique avec au moins une partie des moyens de broyage, par exemple :
- une pluralité d'éléments caloducs répartis uniformément à la périphérie et en contact physique contre la paroi périphérique de la chambre sur au moins une majeure partie de sa longueur;
- et/ou des éléments caloducs en contact physique avec l'arbre central rotatif (14), par exemple un élément caloduc agencé à l'intérieur de ce dernier, monté en rotation dans la chambre (10) et/ou avec les éléments de broyage présents sur ledit arbre central rotatif (14).

4. Réacteur de broyage et de torréfaction de biomasse selon la revendication 3, dans lequel les éléments caloducs sont chacun munis au moins à une de leur extrémité d'ailettes (1600) pour constituer un échangeur thermique entre un gaz et le fluide caloporteur à l'intérieur dudit caloduc.

5. Réacteur de broyage et de torréfaction de biomasse selon l'une des revendications précédentes, dans lequel les moyens de broyage comprennent :
- des encoches présentes sur l'arbre central monté en rotation dans la chambre, les encoches étant adaptées pour arracher les particules de biomasse contre la paroi interne (110) périphérique de la chambre (10), dite carcasse, en constituant ainsi un broyeur de type à couteaux ;
- ou des marteaux (15) présents sur l'arbre central rotatif (14) monté en rotation dans la chambre, les marteaux étant adaptés pour percuter et éclater les particules de biomasse contre la paroi interne périphérique de la chambre, dite carcasse, en constituant ainsi un broyeur de type à marteaux.

6. Système comprenant un réacteur de broyage et de torréfaction de biomasse selon l'une des revendications précédentes et un premier sélecteur dynamique à vitesse variable immédiatement en aval du réacteur, ledit premier sélecteur dynamique (2) étant adapté pour obtenir en sortie du réacteur des particules inférieures à un premier diamètre souhaité et pour réinjecter dans le broyeur les particules de diamètre supérieur au premier diamètre souhaité.

7. Procédé de mise en oeuvre d'un réacteur selon l'une des revendications 1 à 5, ou d'un système selon la revendication 6, selon lequel on préchauffe les moyens de chauffage jusqu'à ce qu'ils atteignent la température prédéterminée de torréfaction, comprise entre 200°c et 350°C, avant l'alimentation du réacteur en biomasse séchée.

8. Procédé selon la revendication 7, selon lequel l'alimentation en biomasse séchée est faite par gravité et/ou avec un taux d'humidité de celle-ci dans une gamme de 10 à 15%.

9. Procédé selon l'une des revendications 7 ou 8, selon lequel on injecte en outre un flux de gaz portés à la température prédéterminée de torréfaction directement dans la chambre.

10. Installation de traitement de biomasse, de préférence ligno-cellulosique, comprenant un système selon la revendication 6, une presse à granuler (4) et en outre un deuxième sélecteur dynamique (30) relié en aval au réacteur, et le cas échéant au premier sélecteur dynamique, le deuxième sélecteur dynamique étant adapté pour séparer des particules en sortie du réacteur et ayant un diamètre inférieur au premier diamètre, celles dont le diamètre est supérieur à un deuxième diamètre souhaité, l'une des sorties du deuxième sélecteur dynamique étant reliée à la presse à granuler (4) pour l'alimenter en particules de dimension comprise entre le premier et deuxième diamètre, l'autre des sorties (30) du deuxième sélecteur dynamique étant adaptée pour extraire les particules de dimension inférieure au deuxième diamètre souhaité.

11. Installation de traitement de biomasse selon la revendication 10, comprenant un cyclone (3) agencé entre le deuxième sélecteur dynamique (30) et la presse à granuler (4).

12. Installation de traitement de biomasse selon la revendication 10 ou 11, dans laquelle la sortie du deuxième sélecteur dynamique adaptée pour extraire les particules de dimension inférieure au deuxième diamètre souhaité est reliée à une chambre de combustion (6) distincte de la chambre de réacteur, adaptée pour réaliser une post-combustion des gaz issus de la torréfaction et des particules de dimension inférieure au deuxième diamètre à une température prédéterminée, dite de post-combustion, comprise entre 800 et 1000°C, de préférence égale à 850°C.

13. Installation de traitement de biomasse selon la revendication 12, dans laquelle la chambre de combustion (6) comprend au moins un brûleur multi-combustible (60) pour simultanément réaliser une post-combustion des gaz issus de la torréfaction et des particules de dimension inférieure au deuxième diamètre et des combustibles de matière solide, par exemple dans laquelle le brûleur multi-combustible est relié à la presse à granuler de sorte que les combustibles de matière solide sont des granulés torréfiés produits par ladite presse à granuler.

14. Installation de traitement de biomasse selon l'une des revendications 12 ou 13, dans laquelle la sortie de la chambre de combustion (6) est reliée au réacteur (1) de sorte à chauffer les moyens de chauffage par les gaz de post-combustion, en étant par exemple reliée à l'entrée du réacteur de sorte à injecter les gaz de post-combustion, à la température de torréfaction, dans la chambre de réacteur, et/ou en étant reliée aux échangeurs thermiques constitués par les ailettes des caloducs de sorte que l'énergie de chauffage du fluide caloporteur des caloducs est apportée par les gaz de post-combustion.

15. Installation de traitement de biomasse selon l'une des revendications 12 à 14, comprenant en outre un échangeur thermique supplémentaire (7), distinct des échangeurs thermiques des caloducs, dont le circuit de fluide chaud est relié à la sortie de la chambre de combustion et dont le circuit de fluide froid est relié à un sécheur (5) adapté pour sécher la biomasse avant son alimentation dans le réacteur, de sorte que l'énergie de chauffage du sécheur est apportée par les gaz de post-combustion.

## Patentansprüche

1. Reaktor (1) zum Zermahlen und Torrefizieren von Biomasse, enthaltend:
- eine Kammer (10), die innen von Innenwänden (110) eingegrenzt wird;
- Mahleinrichtungen, die innerhalb der Kammer (10) angeordnet sind und eine drehbare Mittelwelle (14), die in der Kammer (10) drehbar gelagert ist, und Mahlelemente aufweisen, die an der drehbaren Mittelwelle (14) vorhanden sind, um an den Innenwänden (110) Biomasse zu zermahlen, die vorzugsweise lignocellulosehaltig ist und innerhalb der Kammer (10) vorliegt;
- Heizeinrichtungen (16, 160, 161, 1600, 17), um die innerhalb der Kammer (10) vorliegende Biomasse zu erhitzen und durch Wärmeleitung über die Mahleinrichtungen auf einer vorbestimmten Temperatur, Torrefizierungstemperatur genannt, zwischen 200 °C und 350 °C zu halten, um gleichzeitig die Zermahlung und Torrefizierung der Biomasse in der Kammer (10) durchzuführen.

2. Reaktor zum Zermahlen und Torrefizieren von Biomasse nach Anspruch 1, wobei die Mahleinrichtungen und die Innenwände der Kammer im Wesentlichen identische Wärmeleitfähigkeiten aufweisen.

3. Reaktor zum Zermahlen und Torrefizieren von Biomasse nach einem der vorangehenden Ansprüche, wobei die Heizeinrichtungen aus Wärmeübertragungselementen (16, 160, 161) bestehen, die mit zumindest einem Teil der Mahleinrichtungen in Berührungskontakt stehen, beispielsweise:
- eine Mehrzahl von Wärmeübertragungselementen, die gleichmäßig am Umfang verteilt sind und an der Umfangswand der Kammer zumindest über einen Großteil ihrer Länge in Berührungskontakt stehen;
- und/oder Wärmeübertragungselemente, die mit der drehbaren Mittelwelle (14) in Berührungskontakt stehen, beispielsweise ein innerhalb der letztgenannten angeordnetes Wärmeübertragungselement, das drehbar in der Kammer (10) gelagert ist, und/oder mit den Mahleinrichtungen, die an der drehbaren Mittelwelle (14) vorhanden sind.

4. Reaktor zum Zermahlen und Torrefizieren von Biomasse nach Anspruch 3, wobei die Wärmeübertragungselemente jeweils an zumindest einem ihrer Enden mit Rippen (1600) versehen sind, um einen Wärmetauscher zum Austausch zwischen einem Gas und dem Wärmeträgermedium innerhalb des Wärmeübertragungselements zu bilden.

5. Reaktor zum Zermahlen und Torrefizieren von Biomasse nach einem der vorangehenden Ansprüche, wobei die Mahleinrichtungen aufweisen:
- Einkerbungen, die an der in der Kammer drehbar gelagerten Mittelwelle vorhanden sind, wobei die Einkerbungen dazu geeignet sind, die Biomassepartikel gegen die umfängliche Innenwand (110) der Kammer (10), Außengehäuse genannt, zu reißen, um so eine Mühle vom Typ Messermühle zu bilden;
- oder Hämmer (15), die an der in der Kammer drehbar gelagerten Mittelwelle (14) vorhanden sind, wobei die Hämmer dazu geeignet sind, die Biomassepartikel gegen die umfängliche Innenwand der Kammer, Außengehäuse genannt, zu schlagen und aufzubrechen, um so eine Mühle vom Typ Hammermühle zu bilden.

6. System mit einem Reaktor zum Zermahlen und Torrefizieren von Biomasse nach einem der vorangehenden Ansprüche und mit einem ersten dynamischen Sichter mit variabler Geschwindigkeit, der dem Reaktor unmittelbar nachgelagert ist, wobei der dynamische Sichter (2) dazu geeignet ist, am Auslass des Reaktors Partikel zu erhalten, die kleiner als ein erster gewünschter Durchmesser sind, und um Partikel, die im Durchmesser größer als der erste gewünschte Durchmesser sind, wieder in die Mühle einzuspeisen.

7. Verfahren zum Betreiben eines Reaktors nach einem der Ansprüche 1 bis 5 bzw. eines Systems nach Anspruch 6, wobei die Heizeinrichtungen solange vorerhitzt werden, bis sie die vorbestimmte Torrefizierungstemperatur zwischen 200 °C und 350 °C erreichen, bevor der Reaktor mit getrockneter Biomasse beschickt wird.

8. Verfahren nach Anspruch 7, wobei die Beschickung mit getrockneter Biomasse durch Schwerkraft und/oder mit einem Feuchtegehalt derselben in einem Bereich von 10 bis 15 % erfolgt.

9. Verfahren nach einem der Ansprüche 7 oder 8, wobei ferner ein Gasstrom eingeleitet wird, der unmittelbar in der Kammer auf die vorbestimmte Torrefizierungstemperatur gebracht wird.

10. Anlage zum Verarbeiten von Biomasse, vorzugsweise aus Lignocellulose, enthaltend ein System nach Anspruch 6, eine Pelletpresse (4) und ferner einen zweiten dynamischen Sichter (30), der mit dem Reaktor und gegebenenfalls mit dem ersten dynamischen Sichter nachgelagert verbunden ist, wobei der zweite dynamische Sichter dazu geeignet ist, am Auslass des Reaktors aus Partikeln, die im Durchmesser kleiner als der erste Durchmesser sind, diejenigen abzuscheiden, die im Durchmesser größer als ein zweiter gewünschter Durchmesser sind, wobei einer der Auslässe des zweiten dynamischen Sichters mit der Pelletpresse (4) verbunden ist, um diesen mit Partikel zu beschicken, deren Abmessungen zwischen dem ersten und dem zweiten Durchmesser liegen, wobei der andere der Auslässe (30) des zweiten dynamischen Sichters dazu geeignet ist, Partikel zu entfernen, deren Abmessungen kleiner als der zweite gewünschte Durchmesser sind.

11. Anlage zum Verarbeiten von Biomasse nach Anspruch 10, enthaltend einen Zyklon (3), der zwischen dem zweiten dynamischen Sichter (30) und der Pelletpresse (4) angeordnet ist.

12. Anlage zum Verarbeiten von Biomasse nach Anspruch 10 oder 11, wobei der Auslass des zweiten dynamischen Sichters, der dazu geeignet ist, Partikel mit kleinerer Abmessung als der zweite gewünschte Durchmesser zu entfernen, mit einer Verbrennungskammer (6) verbunden ist, die sich von der Reaktorkammer unterscheidet und dazu geeignet ist, eine Nachverbrennung von Gasen, die aus der Torrefizierung stammen, sowie von Partikeln mit kleinerer Abmessung als der zweite Durchmesser, mit einer vorbestimmten Temperatur, die sogenannte Nachverbrennungstemperatur, zwischen 800 und 1000 °C, vorzugsweise gleich 850 °C, durchzuführen.

13. Anlage zum Verarbeiten von Biomasse nach Anspruch 12, wobei die Verbrennungskammer (6) zumindest einen Multi-Brennstoff-Brenner (60) aufweist, um zugleich eine Nachverbrennung von Gasen, die aus der Torrefizierung stammen, sowie von Partikeln mit kleinerer Abmessung als der zweite Durchmesser und von Brennstoffen aus Feststoff durchzuführen, wobei beispielsweise der Multi-Brennstoff-Brenner mit der Pelletpresse verbunden ist, so dass die Brennstoffe aus Feststoff torrefizierte Pellets sind, die von der Pelletpresse hergestellt werden.

14. Anlage zum Verarbeiten von Biomasse nach einem der Ansprüche 12 oder 13, wobei der Auslass der Verbrennungskammer (6) mit dem Reaktor (1) verbunden ist, so dass die Heizeinrichtungen über die Gase aus der Nachverbrennung erhitzt werden, wobei er beispielsweise mit dem Einlass des Reaktors verbunden ist, so dass die Gase aus der Nachverbrennung mit der Torrefizierungstemperatur in die Reaktorkammer eingeleitet werden, und/oder wobei er mit den Wärmetauschern verbunden ist, die aus den Rippen der Wärmeübertragungselemente bestehen, so dass die Heizenergie für das Wärmeträgermedium der Wärmeträgerelemente von den Gasen aus der Nachverbrennung erbracht wird.

15. Anlage zum Verarbeiten von Biomasse nach einem der Ansprüche 12 bis 14, ferner enthaltend einen zusätzlichen Wärmetauscher (7), der sich von den Wärmetauschern der Wärmeübertragungselemente unterscheidet und dessen Kreislauf von heißem Medium mit dem Auslass der Verbrennungskammer verbunden ist und dessen Kreislauf von kaltem Medium mit einem Trockner (5) verbunden ist, der dazu geeignet ist, die Biomasse vor deren Einspeisen in den Reaktor zu trocknen, so dass die Heizenergie für den Trockner von den Gasen aus der Nachverbrennung erbracht wird.

## Claims

1. A biomass grinding and roasting reactor (1) comprising:
- a chamber (10) interiorly delimited with internal walls (110);
- grinding means laid out inside the chamber (10), including a rotary central shaft (14) rotatably mounted in the chamber (10) and grinding elements present on said rotary central shaft (14) for grinding biomass, preferably ligno-cellulosic biomass, against the internal walls (110), present inside the chamber (10);
- heating means (16, 160, 161, 1600, 17) for heating and maintaining by thermal conduction via said grinding means the biomass present inside the chamber (10), at a predetermined so-called roasting temperature, comprised between 200°C and 350°C, in order to simultaneously achieve grinding and roasting of the biomass in the chamber (10).

2. The biomass grinding and roasting reactor according to claim 1, wherein the grinding means and the internal walls of the chamber have substantially identical heat conductivities.

3. The biomass grinding and roasting reactor according to one of the preceding claims, wherein the heating means consist in heat piping elements (16, 160, 161) in physical contact with at least one portion of the grinding means, for example:
- a plurality of heat piping elements uniformly distributed at the periphery and in physical contact against the peripheral wall of the chamber on at least one major portion of its length;
- and/or wherein heat piping elements are in physical contact with the central rotary shaft (14), for example a heat piping element (160) laid out inside the last one, rotatably mounted in the chamber (10) and/or with the grinding elements present on said central rotary shaft (14).

4. The biomass grinding and roasting reactor according to claim 3, wherein the heat piping elements are each provided at least at one of their ends with fins (1600) for forming a heat exchanger between a gas and the heat transfer fluid inside said heat pipe.

5. The biomass grinding and roasting reactor according to one of the preceding claims, wherein the grinding means comprise:
- notches present on the central shaft rotatably mounted in the chamber, the notches being adapted to tear off the biomass particles against the peripheral internal wall (110) of the chamber (10), a so-called carcass, thereby forming a grinder of the type with knives;
- or hammers (15) present on the central rotary shaft (14) rotatably mounted in the chamber, the hammers being adapted for striking and bursting the biomass particles against the peripheral internal wall of the chamber, a so-called carcass, thereby forming a grinder of the type with hammers.

6. A system comprising a biomass grinding and roasting reactor according to one of the preceding claims and a first dynamic variable speed selector immediately downstream from the reactor, said first dynamic selector (2) being adapted for obtaining at the outlet of the reactor particles of less than a first desired diameter and for re-injecting into the grinder particles with a diameter greater than the first desired diameter.

7. A method for applying a reactor according to one of claims 1 to 5 or a system according to claim 6, according to which the heating means are preheated until they attain the predetermined roasting temperature comprised between 200°C and 350°C before feeding the reactor with dried biomass.

8. The method according to claim 7, according to which the supply of dried biomass is accomplished by gravity and/or with a humidity level of the latter in a range from 10 to 15%.

9. The method according to one of claims 7 or 8, according to which a flow of gases brought to the predetermined roasting temperature is further directly injected into the chamber.

10. An installation for treating biomass, preferably ligno-cellulosic biomass, comprising a system according to claim 6, a granulation press (4) and further a second dynamic sector (30) connected downstream to the reactor, and if necessary to the first dynamic selector, the second dynamic selector being adapted for separating the particles at the outlet of the reactor and having a smaller diameter than the first diameter, those for which the diameter is greater than a second desired diameter, one of the outlets of the second dynamic selector being connected to the granulation press (4) for supplying it with particles with a size comprise between the first and the second diameter, the other one of the outlets (30) of the second dynamic selector being adapted for extracting particles with a size less than the second desired diameter.

11. The biomass treatment installation according to claim 10, comprising a cyclone (3) laid out between the second dynamic selector (30) and the granulation press (4).

12. The biomass treatment installation according to claim 10 or 11, wherein the outlet of the second dynamic selector adapted for extracting the particles with a size of less than the second desired diameter is connected to a combustion chamber (6) distinct from the reactor chamber, adapted for achieving post-combustion of the gases from the roasting and particles of a size less than the second diameter at a predetermined, so-called post-combustion, temperature comprised between 800° and 1,000°C, preferably equal to 850°C.

13. The biomass treatment installation according to claim 12, wherein the combustion chamber (6) comprises at least the one multifuel burner (60) for simultaneously achieving post-combustion of the gases from the roasting and of the particles with a size of less than the second diameter and of the solid material fuels, for example in which the multifuel burner is connected to the granulation press so that the solid material fuels are roasted granules produced by said granulation press.

14. The biomass treatments installation according to one of claims 12 or 13, wherein the outlet of the combustion chamber (6) is connected to the reactor (1) inlet so as to heat the heating means at said roasting temperature with the post-combustion gases, by being for example connected to the inlet of the reactor so as to inject the post-combustion gases at the roasting temperature, into the reactor chamber and/or by being connected to the heat exchangers formed by the fins of the heat pipes so that the energy for heating the heat transfer fluid of the heat pipes is provided by the post-combustion gases.

15. The biomass treatment installation according to one of claims 12 to 14, further comprising an additional heat exchanger (7), distinct from the heat exchangers of the heat pipes, the hot fluid circuit of which is connected to the outlet of the combustion chamber and the cold fluid circuit of which is connected to a dryer (5) adapted for applying the biomass before it being fed into the reactor, so that the energy for heating the dryer is provided by the post-combustion gases.
